# EUROPÄISCHE PATENTANMELDUNG

(11) **EP 4 567 156 A1**
(43) Veröffentlichungstag der Anmeldung: **11.06.2025**
(21) Anmeldenummer: 23215375.9
(22) Anmeldetag: 08.12.2023
(51) Int. Cl.: C25B 1/04, C25B 9/19, C25B 9/77, C25B 15/08

(54) **ELEKTROLYSEANORDNUNG**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Nesselberger, Markus, 60439 Frankfurt (DE); Tadiello, Jean-Philippe, 60439 Frankfurt (DE)
(74) Vertreter: Air Liquide

(57) **Zusammenfassung**

Die Erfindung betrifft eine Elektrolyseanordnung zum Betrieb mit einem alkalischen Elektrolysemedium, umfassend einen ersten und einen zweiten Bereich. Der erste Bereich umfasst einen Elektrolyse-Stack mit einer Vielzahl von Elektrolysezellen und ist zur Erzeugung eines Produktgases in einem Anodenbereich und zur Erzeugung eines Produktgases in einem Kathodenbereich aus dem alkalischen Elektrolysemedium eingerichtet. Der zweite Bereich steht in Fluidverbindung mit dem ersten Bereich und weist eine Mehrzahl von Komponenten auf, welche zum Ausleiten von mit Produktgas angereichertem Elektrolysemedium aus dem ersten Bereich, zum Einleiten von an Produktgas verarmtem Elektrolysemedium in den ersten Bereich, und zum Trennen der erzeugten Produktgase von dem Elektrolysemedium eingerichtet sind. Die Komponenten des zweiten Bereichs weisen einen Innenseitenbereich auf, welcher für den direkten Kontakt zu dem alkalischen Elektrolysemedium eingerichtet ist, wobei der Innenseitenbereich zumindest teilweise aus einer Nickel-Schicht gebildet ist, und wobei die Nickel-Schicht eine Schichtdicke von mindestens 0,1 mm und einen Nickel-Gehalt von mindestens 98 Gew.-% aufweist.

## Beschreibung

Die Erfindung betrifft eine Elektrolyseanordnung zum Betrieb mit einem alkalischen Elektrolysemedium.

Die elektrolytische Spaltung von Wasser zur Herstellung von Wasserstoff gewinnt in der heutigen vom Menschen verursachten Klimawandel geprägten Zeit zunehmend an Bedeutung. Für die Herstellung von elektrolytisch erzeugtem Wasserstoff im großtechnischen Maßstab sind dabei insbesondere zwei Verfahren von herausragender Bedeutung, nämlich die Protonen-Austausch-Membran (PEM) Elektrolyse und die alkalische Elektrolyse.

Bei der alkalischen Elektrolyse laufen kathodenseitig und anodenseitig die folgenden Halbzellenreaktion ab:
Kathodenseite: 2

   H₂O + 2e⁻ → H₂ + 2 OH-
Anodenseite: 2

   OH- → ½ O₂ + 2e- + H₂O

Netto wird aus einem mol Wasser ein halbes mol molekularer Sauerstoff und ein mol molekularer Wasserstoff gebildet. Damit die Reaktionen in den Elektrolysehalbzellen ablaufen können, müssen Hydroxidionen von einer Halbzelle in die andere durch ein Trennelement diffundieren, welches die Kathodenseite und die Anodenseite der Elektrolysezelle voneinander separiert. Ein solches Trennelement wird insbesondere bei der alkalischen Elektrolyse als Diaphragma bezeichnet. Das Diaphragma hat die Funktion, dass die als Ladungsträger dienenden Hydroxidionen zwischen den Halbzellenseiten diffundieren können, und die auf der Kathoden- und Anodenseite erzeugten Produktgase mechanisch voneinander getrennt werden.

Eine Elektrolysezelle weist zwei Elektroden (Kathode und Anode) auf, die von einem flüssigen alkalischen Elektrolysemedium umgeben sind. Als Elektrolysemedium wird üblicherweise konzentrierte wässrige Kalilauge oder Natronlauge verwendet. Ein Elektrolyseur im großtechnischen Maßstab weist eine Vielzahl von Elektrolysezellen auf, wobei die einzelnen Zellen stapelartig übereinanderliegend angeordnet sind und in einem Rahmen oder anderen geeigneten mechanischen Vorrichtung zusammengefasst sind. Diese Konstruktion wird üblicherweise als Elektrolyse-Stack bezeichnet.

Zur Erhöhung der Effizienz der Zellen werden insbesondere mit einem alkalischen Elektrolysesystem arbeitende Elektrolysesysteme bei erhöhter Temperatur betrieben um die Leitfähigkeit des eingesetzten Elektrolyten zu erhöhen und um die Reaktionsgeschwindigkeit zu verbessern.

Das Elektrolysesystem kann grundlegend in zwei Bereiche unterteilt werden.

Erstens umfasst das Elektrolysesystem den Elektrolyse-Stack als solchen. Das Elektrolysemedium und elektrischer Gleichstrom werden in den Elektrolyse-Stack eingespeist, wobei Wasserstoff in den Kathodenräumen und Sauerstoff in den Anodenräumen des Elektrolyse-Stacks erzeugt werden. Das zweiphasige Gemisch aus Elektrolysemedium und Produktgas (Wasserstoff oder Sauerstoff) wird aus dem Elektrolyse-Stack ausgeleitet. Der Elektrolyse-Stack weist außer den Elektroden und den Diaphragmen Bauteile wie Bipolarplatten, Zellrahmen, Verteiler für die Flüssigkeiten und Gase, Dichtungen, sowie druckaufnehmende Teile auf.

Der zweite Bereich umfasst diejenigen Bauteile des Elektrolysesystems, die primär mit dem Elektrolyse-Stack in Fluidverbindung oder elektrischer Verbindung stehen. Diese umfassen die Kreisläufe für das mit Produktgasen angereicherte oder (weitgehend) produktgasfreie Elektrolysemedium, Gas-Flüssig-Abscheider, Wärmeübertrager für das Temperaturmanagement des Elektrolysemediums, das Elektrolysemedienmanagementsystem mit Pumpen, Filtern, Ventilen und Rohrleitungen, das Regelungs- und Steuerungssystem mit Sensoren (Durchflussmessern, Temperatursensoren, Druckaufnehmern) und Aktoren (Regelventile). Häufig werden auch Transformatoren und Gleichrichter diesem Bereich zugerechnet. Dieser zweite Bereich des Elektrolysesystems wird häufig als "*balance of stack*" Bereich, kurz BOS-Bereich, bezeichnet.

Zum Betreiben eines Elektrolysesystems sind weitere Anlagenkomponenten erforderlich, welche das Elektrolysesystem mit dem jeweiligen Industriestandort oder unabhängigen Prozesseinheiten verbinden. Dazu gehören elektrische Komponenten wie Schaltanlagen und Oberwellenfilter, Komponenten für die Sauerstoff- und Wasserstoff-Aufbereitung (Reinigung, Konditionierung (Entfeuchter, autokatalytischer Rekombinierer)), Kühleinheiten für die Temperaturregelung (Medienkühler und -erhitzer, Kühler für die Gleichrichter, Gaskühler für Produktgase), eine Demineralisierungseinheit für die Wasserversorgung, sowie Stickstoff-und Instrumentenluftversorgung. Diese Komponenten der Anlage werden häufig als "*balance of plant*" Komponenten, kurz BOP-Komponenten, bezeichnet.

Das bei der alkalischen Elektrolyse verwendete Elektrolysemedium ist üblicherweise eine wässrige Kaliumhydroxid (KOH)-Lösung mit einer Konzentration von 20 bis 30 Gew.-%. Das Elektrolysemedium zirkuliert im Elektrolyse-Stack und in den BOS-Komponenten des Elektrolysesystems üblicherweise bei einer Temperatur von 60 °C bis 90°C. Alkalische Elektrolyseure können bei Atmosphärendruck und bei Überdruck betrieben werden. Letztere Betriebsart wird auch als Druckelektrolyse bezeichnet. Zur Aufrechterhaltung des Drucks in solchen Elektrolysesystemen sind die BOS-Komponenten in der Regel aus Metall gefertigt. Die mit dem alkalischen Elektrolysesystem in Berührung kommenden BOS-Systeme wie Gas-Flüssigkeit-Abscheider, Elektrolysemedienpumpen, Wärmetauscher zur Temperierung des Elektrolysemediums, Filter und Rohre für die Zirkulation des Elektrolysemediums sind dabei in der Regel aus stahlbasierten Materialien (Kohlenstoffstahl und rostfreie Stähle) hergestellt. Beispiele dafür finden sich in der EP 4001464 A1 und der DE 4014778 A1.

Bei der alkalischen Elektrolyse eines wässrigen Elektrolysemediums kommt dieses somit üblicherweise mit Materialien wie Stahl, insbesondere Kohlenstoffstahl oder rostfreiem Stahl, in Kontakt. Die in diesen Stählen enthaltenen Elemente wie Eisen, Chrom, Molybdän und Mangan werden durch das alkalische Elektrolysemedium ausgelaugt, wodurch sich eine bestimmte Konzentration der Ionen dieser Elemente im Elektrolysemedium anreichert.

Die vorgenannten Kationen können sich dadurch auf den Oberflächen der Kathoden und Anoden des Elektrolyse-Stacks anreichern und so zu einer beschleunigten Alterung des Katalysators führen. Insbesondere wird die elektrochemisch aktive Oberfläche des Katalysators dadurch verkleinert. Dies führt zu einem kontinuierlichen Abbau der Zellaktivität und damit des Elektrolyse-Stacks, sobald ein kritisch großer Bereich mit Kationen bedeckt ist. Dies resultiert in einem kontinuierlichen Anstieg des Verbrauchs an elektrischer Energie bei gleichbleibender Menge an gebildeten Produktgasen. Diese Verringerung der Lebensdauer führt dazu, dass betroffene Zellen entsprechend schneller ersetzt werden müssen. Da der Austausch einzelner Zellen des Elektrolyse-Stacks aufwändig ist, sind Elektroden beziehungsweise Elektrolysezellen mit möglichst langer Lebensdauer wünschenswert.

Ein weiterer unerwünschter Prozess bei der Ablagerung der vorgenannten Kationen ist die Dendritenbildung. Die Dendritenbildung ist unerwünscht, da sie zu Kurzschlüssen innerhalb der Zelle führen kann, wenn das Dendritenwachstum in einer Verbindung einer Anode mit einer Kathode resultiert. Tritt dieses Phänomen auf, muss die betroffene Zelle umgehend ersetzt werden.

Die vorgenannten Probleme sind bei der alkalischen Elektrolyse insbesondere relevant, da die Auslaugungsrate mit steigender Temperatur zunimmt und dadurch auch die Verunreinigungsrate der Elektroden mit der Betriebstemperatur des Elektrolysemediums steigt.

Die Alterung der Elektroden läuft dabei schneller ab, wenn Elektroden mit geringer aktiver Oberfläche verwendet werden.

Die Elektroden der Elektrolysezellen weisen zwei wichtige charakteristische Werte auf, die geometrische und die aktive Oberfläche. Die geometrische Fläche ist im Falle einer runden Elektrode über ihren Durchmesser definiert. Die aktive Oberfläche definiert, wie viel katalytisch aktive Fläche des Katalysators pro Flächeneinheit (z.B. m² oder cm²) geometrischer Fläche zur Verfügung steht. Die aktive Fläche kann um ein Vielfaches größer sein als die geometrische Fläche, in Abhängigkeit von der Art der Herstellung der Elektrode. Bei einer konstanten Verunreinigungskonzentration im Elektrolysemedium und einer konstanten Ablagerungsrate der Ionen pro Einheit aktiver Elektrodenfläche würde eine Elektrode mit einer kleineren aktiven Oberfläche ihre Leistung schneller verlieren, als eine Elektrode mit größerer aktiver Oberfläche.

Eine Aufgabe der vorliegenden Erfindung besteht darin, die vorgenannten Nachteile des Standes der Technik zumindest teilweise zu überwinden.

Insbesondere besteht eine Aufgabe der vorliegenden Erfindung darin, die Anreicherung von Kationen im Elektrolyten zu vermeiden oder zumindest zu begrenzen und dadurch die Alterung der Elektroden in den Elektrolyse-Stacks durch Metallkationen zu vermeiden oder zumindest zu begrenzen. Vorzugsweise ist dabei die Alterung durch Metallkationen wie Eisen-, Chrom-, Mangan- und Molybdän-Kationen zu vermeiden, unabhängig von deren Oxidationsstufe.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Gemäß einem Aspekt der Erfindung wird eine Elektrolyseanordnung zum Betrieb mit einem alkalischen Elektrolysemedium vorgeschlagen, umfassend einen ersten Bereich und einen zweiten Bereich, wobei
- der erste Bereich einen Elektrolyse-Stack umfasst, welcher eine Vielzahl von Elektrolysezellen aufweist, wobei der Elektrolyse-Stack zur Erzeugung eines ersten Produktgases in einem Anodenbereich und zur Erzeugung eines zweiten Produktgases in einem Kathodenbereich aus dem alkalischen Elektrolysemedium eingerichtet ist;
- der zweite Bereich in Fluidverbindung mit dem ersten Bereich steht, und der zweite Bereich eine Mehrzahl von Komponenten aufweist, wobei die Komponenten des zweiten Bereichs zum Ausleiten von mit Produktgas angereichertem Elektrolysemedium aus dem ersten Bereich, zum Einleiten von an Produktgas verarmtem Elektrolysemedium in den ersten Bereich, und zum Trennen der erzeugten Produktgase von dem Elektrolysemedium eingerichtet sind, und wobei
   die Komponenten des zweiten Bereichs zumindest ein Rohrleitungssystem und einen anodenseitigen und einen kathodenseitigen Gas-Flüssigkeit-Abscheider umfassen,
dadurch gekennzeichnet, dass
die Komponenten des zweiten Bereichs einen Innenseitenbereich aufweisen, welcher für direkten Kontakt mit dem alkalischen Elektrolysemedium eingerichtet ist, wobei der Innenseitenbereich zumindest teilweise aus einer Nickel-Schicht gebildet ist, und wobei die Nickel-Schicht eine Schichtdicke von mindestens 0,1 mm und einen Nickel-Gehalt von mindestens 98 Gew.-% aufweist.

Erfindungsgemäß wird der Innenseitenbereich des zweiten Bereichs zumindest teilweise aus einer Nickel-Schicht gebildet, welche eine Schichtdicke von mindestens 0,1 mm aufweist, sowie einen hohen Nickel-Gehalt von mindestens 98 Gew.-% aufweist.

Es wurde gefunden, dass dünnere Nickel-Schichten nicht den gewünschten technischen Effekt erzielen. Das heißt, trotz der bekannten Erhöhung der Korrosionsbeständigkeit durch eine Nickel-Schicht wird eine kontinuierliche Vergiftung der Katalysatoren der Elektroden durch die vorgenannten Kationen beobachtet. Dies wird darauf zurückgeführt, dass dünnere Schichten ein höheres Risiko von Defekten wie Poren, Löchern, Rissen, Schichtungen oder Einschlüssen aufweisen. Solche vergleichsweise dünnen Schichten weisen oft Schichtdicken von weniger als 50 µm auf. Üblicherweise werden solche Schichten durch Verfahren wie stromlose Vernickelung oder Galvanisieren erhalten.

Gleichzeitig wurde gefunden, dass die erfindungsgemäße Nickel-Schicht einen hohen Nickel-Gehalt von mindestens 98 Gew.-% aufweisen muss. Dadurch wird sichergestellt, dass der Gehalt an Nichtnickelmetallen so niedrig ist, dass potentiell aus der Nickelschicht ausgelaugte Kationen des vorgenannten Typs die Lebensdauer der Elektroden und damit Zellen nicht signifikant negativ beeinträchtigen.

Beispiele für geeignete Werkstoffe für die Nickel-Schicht sind Werkstoffe mit der Kennnummer EN 2.4066 (UNS N02200) und EN 2.4068 (UNS N02201).

Geeignete Verfahren zur Erzeugung der Nickelschicht sind
- Auskleidung,
- Plattierungsverfahren wie Walzplattieren, Sprengplattieren und Schweißplattieren,
- Bereitstellung als Vollmaterial mit optional anschließendem Formschluss, Kraftschluss oder Stoffschluss,
- Gießen,
- Spanende Bearbeitung von Vollmaterial, sowie
- Auftragsschweißung.

Der Innenseitenbereich ist zumindest teilweise aus der Nickel-Schicht gebildet. Dabei ist der Innenseitenbereich derjenige Bereich der jeweiligen Komponente des zweiten Bereichs der Elektrolyseanordnung, welcher für direkten Kontakt mit dem alkalischen Elektrolysemedium eingerichtet ist. Das heißt, der Innenseitenbereich steht während des Betriebs der Elektrolyseanordnung in direktem Kontakt mit dem alkalischen Elektrolysemedium. Bei dem Innenseitenbereich kann es sich beispielsweise um die Innenseite einer Rohrleitung, die elektrolysemedienberührenden Flächen einer Umwälzpumpe oder eines Ventils, sowie die Innenfläche eines Gas-Flüssigkeit-Abscheiders handeln. Dabei ist diese Aufzählung nicht als erschöpfend zu verstehen.

Der Innenseitenbereich definiert insbesondere eine Fläche, welche in direktem Kontakt zu dem alkalischen Elektrolysemedium steht, und welche zumindest teilweise aus der Nickel-Schicht gebildet ist.

Die Nickel-Schicht weist einen Nickel-Gehalt von mindestens 98 Gew.-% auf. Vorzugsweise weist die Nickel-Schicht einen Nickel-Gehalt von mindestens 98,0 Gew.- % auf, oder von mindestens 98,5 Gew.-%, oder von mindestens 99,0 Gew.-%, oder von mindestens 99,5 Gew.-%, oder mindestens 99,6 Gew.-%, oder mindestens 99,7 Gew.-%, oder mindestens 99,8 Gew.-%, oder mindestens 99,9 Gew.-%, oder mindestens 99,95 Gew.-%, oder mindestens 99,99 Gew.-%.

Vorzugsweise weist die Nickel-Schicht einen Gehalt an Eisen von weniger als 2 Gew.-% auf, oder von weniger als 2,0 Gew.-%, oder weniger als 1,0 Gew.-%, oder weniger als 0,5 Gew.-%, oder weniger als 0,3 Gew.-%, oder weniger als 0,2 Gew.- %, oder weniger als 0,1 Gew.-%, oder weniger als 500 ppm, oder weniger als 100 ppm, oder weniger als 50 ppm, oder weniger als 25 ppm, oder weniger als 10 ppm, oder weniger als 5 ppm, oder weniger als 1 ppm.

Vorzugsweise weist die Nickel-Schicht einen Gehalt an Chrom von weniger als 2 Gew.-% auf, oder von weniger als 2,0 Gew.-%, oder weniger als 1,0 Gew.-%, oder weniger als 0,5 Gew.-%, oder weniger als 0,3 Gew.-%, oder weniger als 0,2 Gew.- %, oder weniger als 0,1 Gew.-%, oder weniger als 500 ppm, oder weniger als 100 ppm, oder weniger als 50 ppm, oder weniger als 25 ppm, oder weniger als 10 ppm, oder weniger als 5 ppm, oder weniger als 1 ppm.

Vorzugsweise weist die Nickel-Schicht einen Gehalt an Molybdän von weniger als 2 Gew.-% auf, oder von weniger als 2,0 Gew.-%, oder weniger als 1,0 Gew.-%, oder weniger als 0,5 Gew.-%, oder weniger als 0,3 Gew.-%, oder weniger als 0,2 Gew.- %, oder weniger als 0,1 Gew.-%, oder weniger als 500 ppm, oder weniger als 100 ppm, oder weniger als 50 ppm, oder weniger als 25 ppm, oder weniger als 10 ppm, oder weniger als 5 ppm, oder weniger als 1 ppm.

Vorzugsweise weist die Nickel-Schicht einen Gehalt an Mangan von weniger als 2 Gew.-% auf, oder von weniger als 2,0 Gew.-%, oder weniger als 1,0 Gew.-%, oder weniger als 0,5 Gew.-%, oder weniger als 0,3 Gew.-%, oder weniger als 0,2 Gew.- %, oder weniger als 0,1 Gew.-%, oder weniger als 500 ppm, oder weniger als 100 ppm, oder weniger als 50 ppm, oder weniger als 25 ppm, oder weniger als 10 ppm, oder weniger als 5 ppm, oder weniger als 1 ppm.

Der erste Bereich der Elektrolyseanordnung umfasst einen Elektrolyse-Stack mit einer Vielzahl von Elektrolysezellen. Elektrolyse-Stacks sind dem Fachmann hinlänglich bekannt. Sie bestehen aus einer Vielzahl stapelartig angeordneter Elektrolysezellen, welche durch eine mechanische Vorrichtung fixiert werden.

Der Elektrolyse-Stack umfasst einen Anodenbereich und einen Kathodenbereich. Unter dem Anodenbereich ist die Gesamtheit der Anodenräume der Zellen des Elektrolyse-Stacks zu verstehen. Unter dem Kathodenbereich ist die Gesamtheit der Kathodenräume der Zellen des Elektrolyse-Stacks zu verstehen. Im Anodenbereich wird vorzugsweise Sauerstoff als Produktgas erzeugt. Im Kathodenbereich wird vorzugsweise Wasserstoff als Produktgas erzeugt.

Der zweite Bereich steht in Fluidverbindung mit dem ersten Bereich. Die Fluidverbindung zwischen dem ersten und zweiten Bereich ermöglicht die Zirkulation von mit Produktgas angereichertem Elektrolysemedium und an Produktgas verarmtem Elektrolysemedium zwischen dem ersten Bereich und dem zweiten Bereich. Unter mit Produktgas angereichertem Elektrolysemedium wird insbesondere ein zweiphasiges Gemisch aus Elektrolysemedium und Produktgas verstanden, welches im Anodenbereich beziehungsweise Kathodenbereich des Elektrolyse-Stacks erzeugt wird. Die Elektrolyseanordnung ist so konfiguriert, dass dieses zweiphasige Gemisch aus dem ersten Bereich ausgeleitet und in den zweiten Bereich eingeleitet werden kann. Weiterhin ist die Elektrolyseanordnung so konfiguriert, dass an Produktgas verarmtes Elektrolysemedium aus dem zweiten Bereich ausgeleitet und in den ersten Bereich eingeleitet werden kann. Unter an Produktgas verarmtem Elektrolysemedium wird insbesondere ein Elektrolysemedium verstanden, aus welchem das jeweilige Produktgas durch Gas-Flüssigkeit-Abscheidung abgetrennt wurde. Vorzugsweise weist das an Produktgas verarmte Elektrolysemedium nur eine flüssige Phase auf. Das an Produktgas verarmte Elektrolysemedium kann dennoch eine gewisse Restmenge an gelöstem oder ungelöstem Produktgas enthalten.

Zur Erfüllung der vorstehenden Funktionen weist der zweite Bereich eine Mehrzahl von Komponenten auf. Zumindest weist der zweite Bereich als Komponenten ein Rohrleitungssystem und einen anodenseitigen und einen kathodenseitigen Gas-Flüssigkeit-Abscheider auf. Die Gas-Flüssigkeit-Abscheider sind zum Abtrennen der im ersten Bereich erzeugten Produktgase von dem alkalischen Elektrolysemedium eingerichtet. Vorzugsweise weist der zweite Bereich weitere Komponenten auf, insbesondere zumindest eine Pumpe, zumindest einen Kühler zur Kühlung des Elektrolysemediums, zumindest ein Regelventil, und zumindest einen Sensor. Sensoren sind insbesondere Durchflussmesser, Temperaturfühler und Druckaufnehmer. Transformatoren und Gleichrichter sind im Sinne der Erfindung nicht dem zweiten Bereich zuzuordnen, da diese elektronischen Bauteile nicht für den Kontakt zum Elektrolysemedium eingerichtet sind. Die vorgenannten Bauteile sind nicht fluidisch über das Elektrolysemedium, sondern elektrisch mit dem Elektrolyse-Stack verbunden.

Vorzugsweise ist die Elektrolyseanordnung so konfiguriert, dass diese mit Überdruck betrieben werden kann. Unter dem Begriff "Überdruck" ist in diesem Zusammenhang ein Druck oberhalb des Atmosphärendrucks zu verstehen. Insbesondere ist die Elektrolyseanordnung für einen Betrieb bei einem Absolutdruck von 5 bis 40 bar eingerichtet, vorzugsweise für einen Absolutdruck von 15 bis 35 bar.

Weiterhin ist die Elektrolyseanordnung vorzugsweise so konfiguriert, dass diese bei einer Temperatur oberhalb von Raumtemperatur betrieben werden kann. Insbesondere ist die Elektrolyseanordnung für einen Betrieb bei einer Temperatur von 40 °C bis 150 °C eingerichtet, vorzugsweise für einen Betrieb bei einer Temperatur von 70 °C bis 120 °C eingerichtet, weiter bevorzugt für einen Betrieb bei einer Temperatur von 70 °C bis 100 °C eingerichtet ist. Die vorgenannten Maximaltemperaturen sind insbesondere Temperaturen des Elektrolysemedium an einem Auslass des Elektrolyse-Stacks.

Gemäß einem weiteren Aspekt der Erfindung ist die Elektrolyseanordnung dadurch gekennzeichnet, dass der Innenseitenbereich teilweise aus der Nickel-Schicht gebildet ist, und teilweise aus einer Metalllegierung-Schicht gebildet ist, wobei die Metalllegierung der Metalllegierung-Schicht einen Eisen-Gehalt von 10 Gew.-% oder weniger aufweist.

Gemäß dieser Ausführungsform ist eine Teilfläche des Innenseitenbereichs aus der Nickel-Schicht gebildet, und eine Teilfläche des Innenseitenbereichs ist aus einer Metalllegierung-Schicht gebildet. Die Metalllegierung dieser Metalllegierung-Schicht weist dabei einen Eisen-Gehalt von 10 Gew.-% oder weniger auf.

Die Metalllegierung-Schicht weist vorzugsweise eine Schichtdicke von mindestens 0,1 mm auf. Besonders bevorzugt weist die Metalllegierung-Schicht die gleiche Schichtdicke wie die Nickel-Schicht auf.

Bestimmte Abschnitte des Innenseitenbereichs können optional nicht mit einer Nickel-Schicht versehen werden. Für diese Bereiche wird vorzugsweise eine Metalllegierung mit einem Eisen-Gehalt von 10 Gew.-% oder weniger verwendet. Beispiele für geeignete Werkstoffe sind die Werkstoffe mit den Kennnummern UNS N04400, UNS N05500, UNS N06600, UNS N06601, UNS N06625, sowie UNS N06022.

Vorzugsweise weist die Metalllegierung-Schicht zumindest ein Element aus der Gruppe der Metalle
- Nickel,
- Kupfer,
- Chrom,
- Molybdän
auf. Die Metalllegierungs-Schicht weist somit vorzugsweise eine Metalllegierung mit oder aus den vorgenannten Metallen und mit einem Eisen-Gehalt von 10 Gew.-% oder weniger auf.

Geeignete Verfahren zur Erzeugung der Metalllegierung-Schicht sind
- Auskleidung,
- Plattierungsverfahren wie Walzplattieren, Sprengplattieren und Schweißplattieren,
- Bereitstellung als Vollmaterial mit optional anschließendem Formschluss, Kraftschluss oder Stoffschluss,
- Gießen,
- Spanende Bearbeitung von Vollmaterial, sowie
- Auftragsschweißung.

Vorzugsweise weist die Metalllegierung der Metalllegierung-Schicht einen Eisen-Gehalt von 10,0 Gew.-% oder weniger auf, oder von 8,0 Gew.-% oder weniger auf, oder von 6,0 Gew.-% oder weniger auf, oder von 5,0 Gew.-% oder weniger auf, oder von 4,0 Gew.-% oder weniger auf, oder von 3,0 Gew.-% oder weniger auf, oder von 2,0 Gew.-% oder weniger auf, oder von 1,0 Gew.-% oder weniger auf, oder von 0,5 Gew.- % oder weniger auf, oder von 0,25 Gew.-% oder weniger auf, oder von 0,10 Gew.-% oder weniger auf, oder von 500 ppm oder weniger auf, oder von 250 ppm oder weniger auf, oder von 100 ppm oder weniger auf, oder von 50 ppm oder weniger auf, oder von 10 ppm oder weniger auf.

Gemäß einem weiteren Aspekt der Erfindung ist die Elektrolyseanordnung dadurch gekennzeichnet, dass der Innenseitenbereich zu mindestens 50 % seiner Gesamtfläche aus der Nickel-Schicht gebildet ist.

Weiter bevorzugt ist der Innenseitenbereich zu mindestens 60 % seiner Gesamtfläche aus der Nickel-Schicht gebildet, oder zu mindestens 70 % seiner Gesamtfläche aus der Nickel-Schicht gebildet, oder zu mindestens 80 % seiner Gesamtfläche aus der Nickel-Schicht gebildet, oder zu mindestens 90 % seiner Gesamtfläche aus der Nickel-Schicht gebildet.

Gemäß einem weiteren Aspekt der Erfindung ist die Elektrolyseanordnung dadurch gekennzeichnet, dass der Innenseitenbereich zu mindestens 50 % seiner Gesamtfläche aus der Nickel-Schicht gebildet ist, und die restliche Fläche des Innenseitenbereichs aus der Metalllegierung-Schicht mit einem Eisen-Gehalt von weniger als 10,0 Gew.-% gebildet ist.

Vorzugsweise ist der Innenseitenbereich dabei zu mindestens 60 % seiner Gesamtfläche aus der Nickel-Schicht gebildet, oder zu mindestens 70 % seiner Gesamtfläche aus der Nickel-Schicht gebildet, oder zu mindestens 80 % seiner Gesamtfläche aus der Nickel-Schicht gebildet, oder zu mindestens 90 % seiner Gesamtfläche aus der Nickel-Schicht gebildet, und die jeweils restliche Fläche des Innenseitenbereichs ist aus der Metalllegierung-Schicht mit einem Eisen-Gehalt von weniger als 10,0 Gew.-% gebildet.

Gemäß einem weiteren Aspekt der Erfindung ist die Elektrolyseanordnung dadurch gekennzeichnet, dass die Nickel-Schicht eine Schichtdicke von mindestens 0,2 mm aufweist, vorzugsweise eine Schichtdicke von mindestens 0,3 mm aufweist.

Weiterhin auch bevorzugt weist die Nickel-Schicht eine Schichtdicke von mindestens 0,4 mm auf, oder von mindestens 0,5 mm auf, oder von mindestens 0,7 mm auf, oder von mindestens 0,9 mm auf, oder von mindestens 1,0 cm auf, oder von mindestens 1,5 cm auf, oder von mindestens 2,0 cm auf.

Gemäß einem weiteren Aspekt der Erfindung ist die Elektrolyseanordnung dadurch gekennzeichnet, dass die Metalllegierung-Schicht eine Schichtdicke von mindestens 0,2 mm aufweist, vorzugsweise eine Schichtdicke von mindestens 0,3 mm aufweist.

Weiterhin auch bevorzugt weist die Metalllegierung-Schicht eine Schichtdicke von mindestens 0,4 mm auf, oder von mindestens 0,5 mm auf, oder von mindestens 0,7 mm auf, oder von mindestens 0,9 mm auf, oder von mindestens 1,0 cm auf, oder von mindestens 1,5 cm auf, oder von mindestens 2,0 cm auf.

Gemäß einem weiteren Aspekt der Erfindung ist die Elektrolyseanordnung dadurch gekennzeichnet, dass die Nickel-Schicht eine metallische Basis-Schicht überdeckt, wobei die metallische Basis-Schicht nicht für den direkten Kontakt zu dem alkalischen Elektrolysemedium eingerichtet ist.

Die Nickel-Schicht überdeckt die metallische Basis-Schicht, das heißt im Betrieb der Elektrolyseanordnung kontaktiert die Nickel-Schicht in den entsprechenden Bereichen das alkalische Elektrolysemedium. Die metallische Basis-Schicht ist zumindest formschlüssig, oder kraftschlüssig, oder stoffschlüssig mit der Nickel-Schicht verbunden. Dabei ist die metallische Basis-Schicht so ausgebildet, dass diese das alkalische Elektrolysemedium im Betrieb der Elektrolyseanordnung nicht kontaktiert.

In Bezug auf die metallische Basis-Schicht ist bevorzugt, dass diese aus einem Kohlenstoff-Stahl und/oder aus einem rostfreien Edelstahl gebildet ist.

Beispiele für geeignete Werkstoffe sind die Stähle mit der Werkstoff Kennnummer 1.0345, 1.0425, 1.0481, 1.0473, 1.0487, 1.0488, 1.4404, 1.4462, 1.5415, oder 1.0565.

Gemäß einem weiteren Aspekt der Erfindung ist die Elektrolyseanordnung dadurch gekennzeichnet, dass die Metalllegierung-Schicht mit einem Eisen-Gehalt von 10,0 Gew.-% oder weniger eine metallische Basis-Schicht überdeckt, wobei die metallische Basis-Schicht nicht für den direkten Kontakt zu dem alkalischen Elektrolysemedium eingerichtet ist.

Die Metalllegierung-Schicht mit einem Eisen-Gehalt von 10,0 Gew.-% oder weniger überdeckt die metallische Basis-Schicht, das heißt im Betrieb der Elektrolyseanordnung kontaktiert die Metalllegierung-Schicht in den entsprechenden Bereichen das alkalische Elektrolysemedium. Die metallische Basis-Schicht ist zumindest formschlüssig, oder kraftschlüssig, oder stoffschlüssig mit der Metalllegierung-Schicht mit einem Eisen-Gehalt von 10,0 Gew.-% oder weniger verbunden. Dabei ist die metallische Basis-Schicht so ausgebildet, dass diese das alkalische Elektrolysemedium im Betrieb der Elektrolyseanordnung nicht kontaktiert.

Dabei ist bevorzugt, dass die metallische Basis-Schicht aus einem Kohlenstoff-Stahl und/oder aus einem rostfreien Edelstahl gebildet ist.

Beispiele für geeignete Werkstoffe sind die Stähle mit der Werkstoff Kennnummer 1.0345, 1.0425, 1.0481, 1.0473, 1.0487, 1.0488, 1.4404, 1.4462, 1.5415, oder 1.0565.

Gemäß einem weiteren Aspekt der Erfindung ist die Elektrolyseanordnung dadurch gekennzeichnet, dass die Nickel-Schicht nicht durch ein chemisches oder ein elektrochemisches Beschichtungsverfahren auf der Basisschicht erzeugt wird.

Durch die vorgenannten Verfahren werden in der Regel keine ausreichenden Schichtdicken erreicht, das heißt damit erzeugte Nickel-Schichten weisen üblicherweise eine Schichtdicke von weniger als 0,1 mm auf. Die Verwendung der vorgenannten Verfahren zur Erzeugung der Nickel-Schicht ist somit nicht bevorzugt.

Gemäß einem weiteren Aspekt der Erfindung ist die Elektrolyseanordnung dadurch gekennzeichnet, dass die Elektrolyseanordnung zum Betrieb mit einem wässrigen Elektrolysemedium eingerichtet ist, welches eine Hydroxidionen-Konzentration von mindestens 1 mol pro Liter Elektrolysemedium aufweist.

Das Elektrolysemedium ist vorzugsweise ein Medium auf Wasser-Basis, welches Hydroxidionen und ein geeignetes Gegenkation, insbesondere Natrium und/oder Kalium, umfasst.

Bevorzugt weist das wässrige Elektrolysemedium eine Hydroxidionen-Konzentration von mindestens 2 mol pro Liter Elektrolysemedium auf, oder von mindestens 3 mol pro Liter Elektrolysemedium auf, oder von mindestens 4 mol pro Liter, oder von mindestens 5 mol pro Liter, oder von mindestens 6 mol pro Liter, oder von mindestens 6,5 mol pro Liter, oder von mindestens 6,9 mol pro Liter.

Insbesondere wird wässrige Natronlauge (NaOH_{aq}), weiter bevorzugt wässrige Kalilauge (KOH_{aq}) als Elektrolysemedium verwendet.

Die Erfindung wird im Folgenden durch ein Ausführungsbeispiel näher erläutert. In der folgenden detaillierten Beschreibung wird dabei auf die beigefügte Zeichnung verwiesen, welche illustrativ eine spezifische Ausführungsform der Erfindung darstellt. Die folgende detaillierte Beschreibung ist nicht in einem einschränkenden Sinne zu verstehen, und der Schutzumfang der vorgenannten Aspekte und Ausführungsformen der Erfindung wird durch die beigefügten Ansprüche definiert.

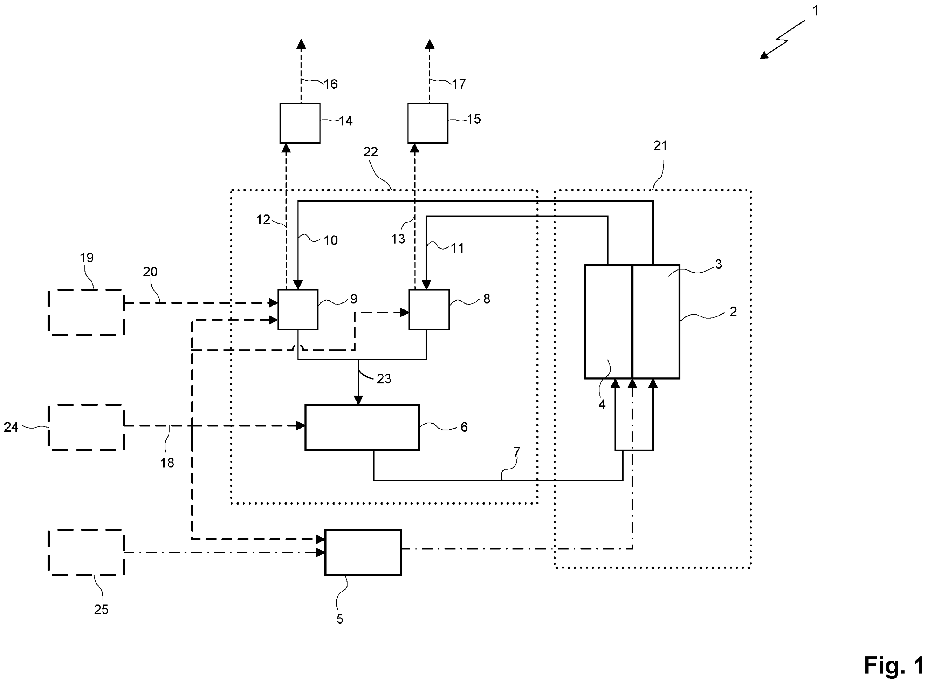

Es zeigt
- Figur 1: eine Blockfließbilddarstellung einer Elektrolyseanordnung 1 gemäß einem Beispiel der Erfindung.

Die Elektrolyseanordnung 1 weist einen ersten Bereich 21 und einen zweiten Bereich 22 auf.

Der zweite Bereich 22 weist mehrere Komponenten auf. Die Komponenten des zweiten Bereichs weisen einen Innenseitenbereich auf (nicht gezeigt), welcher für den direkten Kontakt mit einem stark alkalischen Elektrolysemedium, hier konzentrierter wässriger KOH-Lösung, eingerichtet ist. 90 Prozent der Gesamtfläche dieses Innenseitenbereichs wird aus einer Nickel-Schicht gebildet (nicht gezeigt). Die Nickel-Schicht weist eine Schichtdicke von 0,1 mm und einen Nickel-Gehalt von größer als 98 Gew.-% auf. Die übrigen 10 Prozent der Gesamtfläche des Innenseitenbereichs werden aus einer Metalllegierung-Schicht mit einem Eisen-Gehalt von 10 Gew.-% oder weniger gebildet (nicht gezeigt).

Der erste Bereich 21 weist einen Elektrolyse-Stack 2 mit einem Anodenbereich 3 und einem Kathodenbereich 4 auf. Der erste Bereich 21 steht über eine Rohrleitung 7 und die Rohrleitungen 10 und 11 in Fluidverbindung mit dem zweiten Bereich 22. Über die Rohrleitung 7 wird dem Elektrolyse-Stack 2 einphasiges Elektrolysemedium, das heißt an Produktgasen verarmtes Elektrolysemedium, zugeführt. Im Anodenbereich 3 des Elektrolyse-Stacks 2 wird Sauerstoff als erstes Produktgas erzeugt. Im Kathodenbereich 4 des Elektrolyse-Stacks 2 wird Wasserstoff als zweites Produktgas erzeugt. Über die Rohrleitung 10 wird ein zweiphasiges Gemisch aus alkalischem Elektrolysemedium und Sauerstoff aus dem Anodenbereich 3 ausgeleitet. Über die Rohrleitung 11 wird ein zweiphasiges Gemisch aus alkalischem Elektrolysemedium und Wasserstoff aus dem Kathodenbereich 4 ausgeleitet.

Der zweite Bereich 22 weist eine Einheit 6, einen kathodenseitigen Gas-Flüssigkeit-Abscheider 8, und einen anodenseitigen Gas-Flüssigkeit-Abscheider 9 auf. Weiterhin umfasst der zweite Bereich mehrere Rohrleitungen, insbesondere die Rohrleitungen 7, 10, 11 und 23. Letztere sind, wenn auch teilweise anders dargestellt, dem zweiten Bereich 22 zuzuordnen. Die Einheit 6 umfasst zumindest einen Kühler und eine Pumpe für das alkalische Elektrolysemedium. Gekühltes und an Produktgas verarmtes Elektrolysemedium wird dem Elektrolyse-Stack 2 mittels der Einheit 6 über die Rohrleitung 7 zugeführt. Rohrleitung 7 teilt sich auf zwei Abschnitte für die Verteilung des Elektrolysemediums auf den Anodenbereich 3 und den Kathodenbereich 4 des Elektrolyse-Stacks 2 auf.

Die Komponenten des zweiten Bereichs 22 können auch als "balance of stack" (BOS) Komponenten bezeichnet werden.

Weitere gezeigte, nicht dem zweiten Bereich zuzuordnende Bauteile sind ein Gleichrichter 5, sowie ein Sauerstoff-Kühler 14 und ein Wasserstoff-Kühler 15. Wenn auch hier nicht dem zweiten Bereich 22 zuzuordnen, werden diese Komponenten häufig ebenfalls als "balance of stack" (BOS) Komponenten bezeichnet.

Im Gas-Flüssigkeit-Abscheider 8 wird Wasserstoff vom alkalischen Elektrolysemedium getrennt. Das an Wasserstoff verarmte Elektrolysemedium wird aus dem Gas-flüssigkeit-Abscheider 8 mittels der Rohrleitung 23 ausgeleitet. Im Gas-Flüssigkeit-Abscheider 9 wird Sauerstoff vom alkalischen Elektrolysemedium getrennt. Das an Sauerstoff verarmte Elektrolysemedium wird aus dem Gas-Flüssigkeit-Abscheider 9 mittels der Rohrleitung 23 ausgeleitet. In der Rohrleitung 23 werden die kathodenseitigen und anodenseitigen, an Produktgas verarmten Elektrolysemedien, zusammengeführt und der Einheit 6 zugeführt.

Das in dem Gas-Flüssigkeit-Abscheider 9 abgetrennte erste Produktgas (Sauerstoff) wird über eine Sauerstoffleitung 12 dem Sauerstoffkühler 14 zugeführt. Im Sauerstoffkühler 15 wird mitgeführtes Wasser gekühlt und kondensiert. Das trockene Sauerstoff-Produkt wird über die Sauerstoff-Leitung 16 abgeführt und optional einer weiteren Reinigung und Verwendung unterzogen.

Das in dem Gas-Flüssigkeit-Abscheider 8 abgetrennte zweite Produktgas (Wasserstoff) wird über eine Wasserstoffleitung 13 dem Wasserstoffkühler 15 zugeführt. Im Wasserstoffkühler 15 wird mitgeführtes Wasser gekühlt und kondensiert. Das trockene Wasserstoff-Produkt wird über die Wasserstoff-Leitung 17 abgeführt und einer weiteren Reinigung und Verwendung unterzogen.

Der Gleichrichter 5 versorgt den Elektrolyse-Stack 2 mit Gleichstrom, das heißt er steht mit diesem in elektrischer Verbindung (siehe Strichpunktlinie zwischen Element 2 und 5).

Weiterhin umfasst die Elektrolyse-Anordnung 1 sogenannte "balance of plant" Komponenten 19, 24 und 25.

Der zweite Bereich 22 wird über eine Anlage für de-ionisiertes Wasser 19 mit deionsiertem Frischwasser versorgt. Dadurch wird die durch die Elektrolyse-Reaktion verbrauchte Wassermenge ausgeglichen. Das de-ionsierte Wasser wird über eine Leitung 20 über den Gas-Flüssigkeit-Abscheider 9 zugeführt.

Das Kühlwasser-System 24 sorgt über das Kühlwasserleitungssystem 18 für die Kühlung der Abscheider 8 und 9, der Einheit 6, sowie des Gleichrichters 5.

Der Transformator 25 wandelt Wechselstrom aus dem angeschlossenen Stromnetz (nicht gezeigt) in Wechselstrom mit geeigneter Spannung um und führt diesen dem Gleichrichter 5, mit welchem der Transformator 25 elektrisch verbunden ist (siehe Strichpunktlinie zwischen Element 25 und 5).

### Bezugszeichenliste

- 1: Elektrolyseanordnung
- 2: Elektrolyse-Stack
- 3: Anodenbereich
- 4: Kathodenbereich
- 5: Gleichrichter
- 6: Einheit mit Elektrolysemedienkühler und Umwälzpumpe
- 7: Rohrleitung für einphasiges Elektrolysemedium
- 8: Kathodenseitiger Gas-Flüssigkeit-Abscheider
- 9: Anodenseitiger Gas-Flüssigkeit-Abscheider
- 10: Rohrleitung für zweiphasiges Gemisch (anodenseitig)
- 11: Rohrleitung für zweiphasiges Gemisch (kathodenseitig)
- 12, 16: Sauerstoffleitung
- 13, 17: Wasserstoffleitung
- 14: Sauerstoffkühler
- 15: Wasserstoffkühler
- 18: Kühlwasserleitungssystem
- 19: Anlage für die Erzeugung von de-ionisiertem Wasser
- 20: Leitung für de-ionisiertes Wasser
- 21: Erster Bereich
- 22: Zweiter Bereich
- 23: Rohrleitung für einphasiges Elektrolysemedium
- 24: Kühlwassersystem
- 25: Transformator

## Patentansprüche

1. Elektrolyseanordnung (1) zum Betrieb mit einem alkalischen Elektrolysemedium, umfassend einen ersten Bereich (21) und einen zweiten Bereich (22), wobei
- der erste Bereich (21) einen Elektrolyse-Stack (2) umfasst, welcher eine Vielzahl von Elektrolysezellen aufweist, wobei der Elektrolyse-Stack zur Erzeugung eines ersten Produktgases in einem Anodenbereich (3) und zur Erzeugung eines zweiten Produktgases in einem Kathodenbereich (4) aus dem alkalischen Elektrolysemedium eingerichtet ist;
- der zweite Bereich (22) in Fluidverbindung mit dem ersten Bereich (21) steht, und der zweite Bereich (22) eine Mehrzahl von Komponenten aufweist, wobei die Komponenten des zweiten Bereichs (22) zum Ausleiten von mit Produktgas angereichertem Elektrolysemedium aus dem ersten Bereich (21), zum Einleiten von an Produktgas verarmtem Elektrolysemedium in den ersten Bereich (21), und zum Trennen der erzeugten Produktgase von dem Elektrolysemedium eingerichtet sind, und wobei die Komponenten des zweiten Bereichs zumindest ein Rohrleitungssystem (7, 10, 11, 23) und einen anodenseitigen und einen kathodenseitigen Gas-Flüssigkeit-Abscheider (8, 9) umfassen,
**dadurch gekennzeichnet, dass**
die Komponenten des zweiten Bereichs (22) einen Innenseitenbereich aufweisen, welcher für direkten Kontakt mit dem alkalischen Elektrolysemedium eingerichtet ist, wobei der Innenseitenbereich zumindest teilweise aus einer Nickel-Schicht gebildet ist, und wobei die Nickel-Schicht eine Schichtdicke von mindestens 0,1 mm und einen Nickel-Gehalt von mindestens 98 Gew.-% aufweist.

2. Elektrolyseanordnung nach Anspruch 1, wobei der Innenseitenbereich teilweise aus der Nickel-Schicht gebildet ist, und teilweise aus einer Metalllegierung-Schicht gebildet ist, wobei die Metalllegierung der Metalllegierung-Schicht einen Eisen-Gehalt von 10 Gew.-% oder weniger aufweist.

3. Elektrolyseanordnung nach Anspruch 1 oder 2, wobei der Innenseitenbereich zu mindestens 50 % seiner Gesamtfläche aus der Nickel-Schicht gebildet ist.

4. Elektrolyseanordnung nach einem der Ansprüche 2 oder 3, wobei der Innenseitenbereich zu mindestens 50 % seiner Gesamtfläche aus der Nickel-Schicht gebildet ist, und die restliche Fläche des Innenseitenbereichs aus der Metalllegierung-Schicht mit einem Eisen-Gehalt von weniger als 10,0 Gew.-% gebildet ist.

5. Elektrolyseanordnung nach einem der vorhergehenden Ansprüche, wobei die Nickel-Schicht eine Schichtdicke von mindestens 0,2 mm aufweist, vorzugsweise eine Schichtdicke von mindestens 0,3 mm aufweist.

6. Elektrolyseanordnung nach einem der vorhergehenden Ansprüche, wobei die Nickel-Schicht eine metallische Basis-Schicht überdeckt, wobei die metallische Basis-Schicht nicht für den direkten Kontakt zu dem alkalischen Elektrolysemedium eingerichtet ist.

7. Elektrolyseanordnung nach Anspruch 6, wobei die metallische Basis-Schicht aus einem Kohlenstoff-Stahl und/oder aus einem rostfreien Edelstahl gebildet ist.

8. Elektrolyseanordnung nach einem der Ansprüche 2 bis 7, wobei die Metalllegierung-Schicht mit einem Eisen-Gehalt von 10,0 Gew.-% oder weniger eine metallische Basis-Schicht überdeckt, wobei die metallische Basis-Schicht nicht für den direkten Kontakt zu dem alkalischen Elektrolysemedium eingerichtet ist.

9. Elektrolyseanordnung nach Anspruch 8, wobei die metallische Basis-Schicht aus einem Kohlenstoff-Stahl und/oder aus einem rostfreien Edelstahl gebildet ist.

10. Elektrolyseanordnung nach einem der Ansprüche 6 bis 9, wobei die Nickel-Schicht nicht durch ein chemisches oder ein elektrochemisches Beschichtungsverfahren auf der Basisschicht erzeugt wird.

11. Elektrolyseanordnung nach einem der Ansprüche 1 bis 10, wobei die Elektrolyseanordnung zum Betrieb mit einem wässrigen Elektrolysemedium eingerichtet ist, welches eine Hydroxidionen-Konzentration von mindestens 1 mol pro Liter Elektrolysemedium aufweist.
